# FASCICULE DE BREVET EUROPEEN

(11) **EP 2 080 020 B1**
(45) Date de publication et mention de la délivrance du brevet: **28.03.2012**
(21) Numéro de dépôt: 07858445.5
(22) Date de dépôt: 15.10.2007
(51) Int. Cl.: G01N 27/447

(54) **ÉLECTROPHORÈSE CAPILLAIRE BI - OU MULTIDIMENSIONNELLE AU SEIN D'UN UNIQUE CAPILLAIRE**
ZWEI- ODER MEHRDIMENSIONALE KAPILLARE ELEKTROPHORESE IN EINEM EINZELKAPILLAR
CAPILLARY TWO- OR MULTI-DIMENSIONAL ELECTROPHORESIS IN A SINGLE CAPILLARY

(30) Priorité: 16.10.2006 FR 0609052
(43) Date de publication de la demande: 22.07.2009
(73) Titulaire: Centre National de la Recherche Scientifique - CNRS, 75016 Paris (FR)
(72) Inventeur: COTTET, Hervé, 34000 Montpellier (FR); ANOUTI, Suzanne, 34096 Montpellier (FR); BIRON, Jean-Philippe, 34980 Saint Gely Du Fesc (FR); TRAMBOUZE, Odile, 34725 Saint Andre De Sangonis (FR)
(74) Mandataire: Jacobson, Claude
(86) Numéro de dépôt international: PCT/FR2007/001683
(87) Numéro de publication internationale: WO 2008/046995

(56) Documents cités:
- WO-A-00/57170
- FR-A1- 2 859 113
- JP-A- 58 021 553
- COTTET H ET AL: "Heart-cutting two-dimensional electrophoresis in a single capillary" JOURNAL OF CHROMATOGRAPHY, ELSEVIER SCIENCE PUBLISHERS B.V. AMSTERDAM, NL, vol. 1051, no. 1-2, 8 octobre 2004 (2004-10-08), pages 25-32, XP004587095 ISSN: 0021-9673
- REINHOUD N J ET AL: "AUTOMATED ISOTECHOPHORETIC ANALYTE FOCUSING FOR CAPILLARY ZONE ELECTROPHORESIS IN A SINGLE CAPILLARY USING HYDRODYNAMIC BACK-PRESSURE PROGRAMMING" JOURNAL OF CHROMATOGRAPHY A, ELSEVIER, AMSTERDAM, NL, vol. 641, no. 1, 1993, pages 155-162, XP008028909 ISSN: 0021-9673

## Description

La présente invention a trait à une méthode de séparation bidimensionnelle des constituants d'un mélange, mettant en oeuvre la technique de l'électrophorèse capillaire. Cette technique s'avère notamment utile pour la purification et/ou l'analyse fine des constituants de tels mélanges.

Les techniques de séparation dites "bidimensionnelles" consistent à effectuer la séparation des constituants d'un mélange selon deux critères successifs distincts. Ainsi, ces méthodes mettent en général en oeuvre une première étape qui consiste à séparer les constituants du mélange dans de premières conditions de séparation, puis une deuxième étape consistant à soumettre tout ou partie des fractions séparées obtenues à l'issue de la première étape à une nouvelle séparation dans de nouvelles conditions. Les deux étapes successives de séparation utilisées dans ces procédés mettent généralement en oeuvre deux séparations de types différents, fondées sur deux caractéristiques distinctes des constituants à séparer. Ces deux étapes de séparation successives sont dites "orthogonales" entre elles.

Le terme de "séparation bidimensionnelle" provient du fait qu'à l'origine, ce type de séparation désigne une séparation effectuée sur des supports à deux dimensions, tel que des plaques. Ainsi, par exemple, la chromatographie bidimensionnelle consiste à déposer un échantillon de mélange sur une plaque, à réaliser une élution du mélange par un premier éluant dans une première direction de la plaque, puis à éluer chacune des fractions séparées du mélange (alignées selon la première direction) à l'aide d'un second éluant dans une direction orthogonale à la première direction, ce par quoi on obtient une séparation des constituants dans les deux dimensions de la plaque. De façon similaire, on a développé des techniques bidimensionnelles d'électrophorèse sur couche de gel, comprenant une première séparation électrophorétique des composés d'un mélange par migration selon une première direction du gel, suivie d'une seconde migration dans une direction orthogonale, dans d'autres conditions d'électrophorèse. Ces techniques sont largement utilisées, notamment dans le domaine de la séparation et de l'analyse de mélanges de protéines. Dans ce cadre, on a notamment développé des techniques d'électrophorèse bidimensionnelle sur gel dites (IEF/SDS-PAGE), adaptées à la séparation de protéines ou de peptides, dans lesquelles la première séparation est effectuée par une focalisation isoélectrique (IEF) qui permet une séparation selon le point isoélectrique dans une première direction du gel, et à la seconde étape est une migration électrophorétique dans une direction orthogonale, réalisée en présence d'un gel de polyacrylamide et de dodécylsulfate de sodium (SDS-PAGE). Pour plus de renseignements concernant les techniques d'électrophorèses bidimensionnelles, et notamment les techniques de type (IEF/SDS-PAGE), on pourra notamment se reporter à l'article de P. A. Haynes, S. P. Gygi, D. Figeys, R. Aebersold, dans Electrophoresis, 19, 1862-1871 (1998).

Par extension, le terme de séparation "bidimensionnelle" a ensuite été étendu à toute méthode mettant en oeuvre deux étapes de séparation monodimensionnelle successives, et où la deuxième étape consiste à séparer les composés d'au moins une des fractions séparées lors de la première étape. Par analogie avec les techniques sur support bidimensionnel, on dit que la deuxième étape de séparation est effectuée "selon une direction orthogonale", même dans les cas où aucun support bidimensionnel n'est concrètement mis en oeuvre.

Différentes techniques de séparation bidimensionnelles sont actuellement connues, qui couplent deux (voire plusieurs) étapes successives de séparations "monodimensionnelles" telles que des étapes de chromatographie ou d'électrophorèse. A titre d'exemples de techniques de séparation bidimensionnelle de ce type, on peut notamment citer les techniques décrites dans l'ouvrage High Performance Capillary Electrophoresis, Chemical Analysis Series, vol. 146, n°17, 581-612 (1998) ou celles décrites par J. M. Hille, A.L. Freed, et H. Watzig, dans Electrophoresis, 22, 4035-4052 (2001).

En particulier, on a développé des techniques de séparation bidimensionnelles mettant en oeuvre au moins une étape d'électrophorèse capillaire dans leurs étapes de séparation. Dans ce cadre, certains auteurs ont notamment décrit le couplage de deux étapes successives d'électrophorèse capillaire. A ce sujet, on pourra notamment se reporter aux articles de Mark R; Shure dans Anal.Chem. 71, 1645-1657 (1999), ou de Deepa Mohan et Cheng S. Lee dans Electrophoresis 23, 3160-3167 (2002).

Ces méthodes de séparation bidimensionnelle semblent *a priori* séduisantes, notamment dans la mesure où elles semblent à même de combiner les avantages de la séparation bidimensionnelle à l'efficacité particulièrement prononcée de la séparation électrophorétique. Toutefois, en pratique, ces méthodes nécessitent en général la mise en oeuvre de dispositifs complexes et le plus souvent onéreux, et la séparation réalisée n'est pas toujours à la hauteur de la qualité escomptée.

En particulier, les techniques mettant en oeuvre deux étapes successives d'électrophorèse capillaire consistent actuellement à réaliser le couplage de deux capillaires, de façon à pouvoir réaliser les deux électrophorèses dans des milieux distincts. Ce couplage de deux capillaires est en général difficile à mettre en oeuvre, et il nécessite des dispositifs de couplages souvent onéreux. De plus, comme souligné notamment par Shure et al. dans Anal.Chem. 71, 1645-1657 (1999), la mise en oeuvre de ces dispositifs de couplage affecte en général la qualité de la séparation réalisée, en conduisant notamment à des phénomènes d'étalement des pics qui ne peuvent être limités que très difficilement. De plus, le couplage de deux capillaires passe le plus souvent par des étapes d'échantillonnage, au cours desquelles une partie des composés à analyser est susceptible d'être perdue, ou par des processus de dilution qui s'avèrent notamment préjudiciables pour la sensibilité de la détection des composés séparés, tout particulièrement lorsque le mélange initial à analyser est un milieu dilué.

Pour réaliser une séparation bidimensionnelle mettant en oeuvre deux étapes successives d'électrophorèse capillaire tout en s'affranchissant des problèmes précités, il a été décrit dans la demande FR 2 859 113 un procédé mettant en oeuvre un unique capillaire pour les deux étapes d'électrophorèse, ce qui permet de s'affranchir des problèmes techniques et/ou de coût liés à la mise en oeuvre des systèmes de couplage capillaire/capillaire précités. Dans le procédé de FR 2 859 113, on effectue une première séparation par électrophorèse au sein d'un capillaire ("première dimension" de la séparation) ; on isole ensuite une fraction des composés séparés au sein du capillaire utilisé ; puis, sous l'effet d'une différence de potentiel appliquée entre l'entrée et la sortie du capillaire, on injecte dans le capillaire un milieu séparateur ayant une vitesse de migration apparente plus importante que la fraction isolée au sein du capillaire, ce par quoi ce milieu séparateur rattrape la fraction isolée au sein du capillaire, modifiant ainsi les conditions d'électrophorèse de cette fraction, ce qui permet une nouvelle séparation électrophorétique des constituants de la fraction (deuxième dimension de la séparation).

Les séparations bidimensionnelles effectuées selon le procédé de FR 2 859 113 sont particulièrement intéressantes et efficaces. Néanmoins, elles sont limitées à la mise en oeuvre d'un milieu séparateur spécifique lors de la séparation électrophorétique de leur deuxième étape. En effet, il est requis (1) que le milieu séparateur employé puisse être introduit dans le capillaire grâce au flux électroosmotique ; et (2) qu'il ait une vitesse de migration apparente plus importante que la fraction isolée. Ces conditions limitent la nature du milieu de migration utilisable, ainsi que celle des espèces qui peuvent être séparées.

Un but de la présente invention est de fournir un procédé de séparation bidimensionnelle comprenant deux étapes successives d'électrophorèse capillaire, qui s'affranchisse des inconvénients liés à l'utilisation des systèmes de couplage capillaire/capillaire mis en oeuvre dans les techniques d'électrophorèse capillaire bidimensionnelle généralement connues, mais sans nécessiter la mise en oeuvre des milieu de séparation spécifiques requis dans le procédé de FR 2 859 113. Plus généralement ; l'invention se fixe comme objectif de fournir un procédé de séparation bidimensionnelle efficace, simple de mise en oeuvre et peu onéreux qui soit utilisable efficacement sur un grand nombre de composés, de préférence en évitant au maximum les phénomènes d'élargissement de pics électrophorétiques.

A cet effet, selon un premier aspect, l'invention a pour objet un procédé de séparation des constituants d'un mélange M par électrophorèse capillaire au sein d'un unique capillaire, selon la revendication, ledit procédé comprenant les étapes où :
(A) on introduit et on fait migrer les composés du mélange M au sein du capillaire selon la technique de l'électrophorèse capillaire, sous l'effet d'une différence de potentiel appliquée entre l'entrée et la sortie du capillaire, en employant un premier milieu de séparation MS¹, de façon à réaliser une séparation des composés du mélange M au sein du capillaire, selon leur vitesse de migration dans les conditions de l'étape (A) ;
(B) on isole dans le capillaire une fraction F des composés séparés dans l'étape (A), et on fait migrer ladite fraction F isolée à proximité d'une des extrémités du capillaire, en maintenant cette fraction F au sein du capillaire en mettant en oeuvre l'une et/ou l'autres des étapes suivantes :
   (B.1) on évacue hors du capillaire une partie des composés ayant les vitesses de migration les plus élevées dans les conditions de l'électrophorèse de l'étape (A), en laissant migrer ces composés en sortie du capillaire, éventuellement en maintenant la différence de potentiel de l'étape (A);
      et/ou
   (B.2) on évacue hors du capillaire une partie des composés ayant les vitesses de migration les plus faibles dans les conditions de l'électrophorèse de l'étape (A), en faisant migrer ces composés vers l'entrée du capillaire, éventuellement appliquant une surpression en sortie du capillaire, l'extrémité opposé et/ou en appliquant entre l'entrée et la sortie du capillaire une différence de potentiel de polarité contraire à celle de l'étape (A),
   étant entendu qu'au sens de l'étape (B), on entend par "entrée" du capillaire, l'extrémité du capillaire où est faite l'injection, la "sortie" étant l'autre extrémités
(C) en appliquant une différence de pression entre les extrémités du capillaire, on introduit dans le capillaire un deuxième milieu de séparation MS², distinct du milieu de séparation MS¹ employé dans l'étape (A) par l'extrémité du capillaire à proximité de laquelle est localisée la fraction F, ce par quoi on fait migrer la fraction F vers l'autre extrémité du capillaire tout en remplissant le capillaire par le milieu de séparation MS² ; et
(D) on effectue une électrophorèse capillaire au sein du capillaire ainsi rempli par le milieu de séparation MS² en faisant migrer les composés de la fraction F sous l'effet d'une différence de potentiel appliquée entre l'entrée et la sortie du capillaire, en employant le milieu MS² à titre de milieu de séparation.

Le procédé proposé dans le cadre de la présente invention est un procédé de séparation bidimensionnelle des composés du mélange M, permettant de réaliser une première séparation des constituants du mélange M par électrophorèse capillaire ("première dimension" de l'étape (A) mettant en oeuvre un premier milieu de séparation MS¹), suivie d'une deuxième séparation des constituants d'une fraction des composés ainsi séparés ("deuxième dimension" de l'étape (E)).

De façon caractéristique, dans le procédé de l'invention, ces deux séparations successives sont réalisées au sein d'un même et unique capillaire, ce qui est permis par la succession d'étapes (B) à (C). Dans ces étapes, on isole une fraction F séparée dans l'étape (A) en faisant sortir du capillaire les autres fractions (étape (B)), puis on substitue le milieu séparateur MS¹ employé dans l'étape (A) et présent dans le capillaire à l'issue de l'étape (B) par un autre milieu séparateur MS² (étape (C)).

La substitution de milieu séparateur qui est réalisée dans l'étape (C) s'opère très aisément, simplement en injectant sous pression par une des extrémités du capillaire le milieu MS² substituant, ce qui chasse hors du capillaire le milieu MS¹. Dans le même temps, la fraction d'intérêt, prise "en sandwich" entre le milieu MS² qui est introduit et le milieu MS¹ qui est chassé, se retrouve poussée vers l'autre extrémité du capillaire.

De façon surprenante, les inventeurs ont maintenant mis en évidence que la mise en oeuvre de l'étape (C) peut s'effectuer sans que la différence de pression appliquée entre les extrémités du capillaire induise un élargissement trop important des pics par dispersion hydrodynamique susceptible de nuire à l'efficacité de la séparation.

A l'issue de l'étape (C), on obtient ainsi un capillaire substantiellement rempli de milieu séparateur MS² et contenant un fraction F à proximité d'une de ses extrémités, ce qui permet d'effectuer immédiatement la séparation électrophorétique de l'étape (C) dans le capillaire.

Le procédé de l'invention permet dans ce cadre de substituer le premier milieu séparateur MS¹ par n'importe quel autre milieu séparateur MS², sans aucune limitation quant à la nature de ce nouveau milieu séparateur. Le procédé constitue de ce point de vue un perfectionnement notable du procédé de FR 2 859 113, où seuls certains milieux séparateurs spécifiques étaient envisageables pour la deuxième dimension de la séparation. De façon plus générale, la possibilité offerte par le procédé de l'invention de moduler la nature du milieu de séparation dans l'électrophorèse de l'étape (D) ouvre la voie à des séparations bidimensionnelles par électrophorèse particulièrement efficaces et adaptables à la séparation de nombreux types de mélanges complexes.

De façon générale, la succession des étapes (A) à (D) peut être mise en oeuvre pour effectuer une séparation fine de constituants initialement intimement mêlés dans le mélange M, selon une technique de séparation bidimensionnelle de type usuelle, l'étape (D) étant alors mise en oeuvre pour améliorer les performances séparatives de la séparation monodimensionnelle de l'étape (A).

Selon un mode de réalisation plus spécifique, l'étape (A) peut être mise en oeuvre pour effectuer une purification du mélange M, où des composés d'intérêt sont séparés d'impuretés (neutres ou chargées), lesdits composés d'intérêt étant alors conservés dans le capillaire à titre de fraction F dans l'étape (B), et l'étape (D) est ensuite mise en oeuvre pour séparer les composés d'intérêt présents dans la fraction F. Dans ce cadre, le procédé constitue une alternative très intéressante aux procédés d'électrophorèse usuels qui nécessitent le plus souvent une prépurification des échantillons analysée (dite "*sample clean-up*"), ce qui implique en règle générale la mise en oeuvre de dispositifs consommables onéreux (consommables de dialyse, centrifugation, ou ultrafiltration notamment). Le procédé de l'invention, permet une purification moins coûteuse, notamment dans la mesure où elle ne nécessite pas l'utilisation de tels consommables. De plus elle s'avère plus aisée à mettre en oeuvre, en réduisant les manipulations et les traitements des échantillons, ce qui la rend facilement automatisable.

De façon générale, le mélange M dont on sépare les constituants selon le procédé de l'invention peut être tout mélange adapté à une séparation par électrophorèse capillaire, ce mélange contenant avantageusement (et le plus souvent) des composés électriquement chargés. Pour plus de précisions concernant les mélanges séparables par électrophorèse capillaire, on pourra notamment se reporter à l'article de M. G. Khaledi dans High Performance Capillary Electrophoresis, Chemical Analysis Series, vol. 146, (1998), ou encore à l'ouvrage de S. F. Y. Li "Capillary electrophoresis : principles, practice and applications", Journal of Chromatography Library, vol. 52, troisième impression (1996).

Le plus souvent, le mélange M est un mélange de plusieurs composés chargés, le plus souvent de même charge. Ainsi, selon un premier mode de réalisation, le mélange M est un mélange d'espèces chargées négativement, tel que, par exemple, un mélange comprenant des polymères synthétiques porteurs de groupements anioniques et/ou de charge négatives, des protéines et/ou des peptides à un pH suffisamment élevé pour qu'elles portent des charges négatives, de polysaccharides chargés négativement, et/ou de molécules anioniques (par exemple des acides sous forme déprotonée, notamment des acides organiques déprotonés). Selon un autre mode de mise en oeuvre, le mélange M est un mélange d'espèces chargées positivement, comprenant par exemple des polymères synthétiques chargés positivement porteurs de groupements cationiques et/ou de charge positives, de protéines et/ou de peptides à un pH suffisamment faible pour qu'elles portent des charges positives, de polysaccharides chargés positivement, ou des molécules cationiques (par exemple des bases sous forme protonée, et notamment des bases organiques protonées).

L'étape (A) du procédé de l'invention est une étape de séparation par électrophorèse capillaire classique, qui est avantageusement conduite de façon à séparer au mieux les constituants du mélange M, en général selon leur charge ou selon leur rapport charge/masse. Il est des compétences du spécialiste en électrophorèse d'adapter les conditions à mettre en oeuvre pour obtenir une séparation la plus efficace possible dans l'étape (A). Pour plus de détails concernant les conditions générales de mise en oeuvre d'une électrophorèse conduite de façon à séparer un mélange de composés selon leur charge ou selon leur rapport charge/masse, on pourra notamment se reporter à l'article de M. G. Khaledi dans High Performance Capillary Electrophoresis, Chemical Analysis Series, vol. 146, (1998), ou à l'ouvrage précité de S. F. Y. Li "Capillary electrophoresis : principles, practice and applications", Journa/ of Chromatography Library, vol. 52, troisième impression (1996).

A l'issue de l'électrophorèse de l'étape (A), on obtient, de façon générale, une séparation des composés du mélange en plusieurs fractions, chacune de ces fractions comprenant les composés ayant une vitesse de migration donnée dans les conditions de l'étape (A). Chacune de ces fractions apparaît sous la forme d'un pic unique sur un électrophérogramme. Toutefois, en particulier dans le cas de mélanges complexes tels que des mélanges de protéines ou de peptides, chacun des pics observés contient souvent un mélange de plusieurs constituants.

La fraction F qui est isolée dans le capillaire à l'issue de l'étape (B) est généralement un mélange de composés ayant des vitesses de migration comprises entre deux valeurs de coupure Vₘᵢₙ et Vₘₐₓ (avec Vₘᵢₙ<Vₘₐₓ) dans les conditions de l'électrophorèse l'étape (A). L'étape (B.1), lorsqu'elle est conduite, consiste à évacuer hors du capillaire les composés ayant des vitesses de migration supérieures à Vₘₐₓ. De même, l'étape (B.2), lorsqu'elle est conduite, consiste à évacuer hors du capillaire les composés ayant des vitesses de migration inférieures à Vₘᵢₙ.

Le plus souvent, la fraction F isolée dans l'étape (B) est un mélange de composés ayant sensiblement la même vitesse de migration dans les conditions de l'électrophorèse de l'étape (A), à savoir une fraction constituée par les composés correspondant à un des pics électrophorétiques obtenu suite à l'électrophorèse de l'étape (A). L'étape (B) consiste alors à évacuer hors du capillaire les composés ayant une vitesse de migration différente, correspondant aux autres pics de l'électrophérogramme, et dans l'étape (D) ultérieure, on effectue une séparation des constituants du mélange de composés correspondant au pic isolé dans le capillaire. L'isolement d'une fraction F constituée par les composés correspondant à un pic électrophorétique unique s'avère souvent avantageuse, notamment dans la mesure où elle présente l'avantage d'éviter tout phénomène de recouvrement de pics lors de la séparation électrophorétique de l'étape (D).

Toutefois, selon un mode de réalisation envisageable, la fraction F isolée dans l'étape (B) peut également être un mélange de composés correspondant à une série de pics électrophorétiques successifs obtenu suite à l'électrophorèse de l'étape (A). Dans ce cas, l'étape (B) consiste à évacuer hors du capillaire les composés correspondant aux pics de l'électrophérogramme situés avant et/ou après la série de pics à isoler.

En fonction de la fraction F qu'on souhaite isoler dans l'étape (B), trois grands modes de réalisation sont envisageables pour l'étape (B).

Ainsi, selon un premier mode de réalisation du procédé de l'invention, la fraction F est une fraction de tête, à savoir une fraction constituée par un mélange de composés ayant une ou des vitesse(s) de migration supérieure(s) à celle des composés qu'on fait migrer hors du capillaire. Dans ce cas, l'étape (B) consiste à mettre en oeuvre uniquement l'étape (B.2), sans mettre en oeuvre l'étape (B.1).

Selon ce premier mode de réalisation, la fraction F isolée dans l'étape (B) est avantageusement constituée par les composés du pic de tête observable sur un électrophérogramme de l'électrophorèse de l'étape (A), à savoir un mélange des composés ayant la vitesse de migration (V_{tête}) la plus élevée dans les conditions de l'électrophorèse de l'étape (A), qui apparaissent donc en premier sur un électrophérogramme de l'électrophorèse de l'étape (A). Dans ce cas, l'étape (B.2) consiste à faire sortir du capillaire les autres composés que les composés du pic de tête, qui ont une vitesse de migration inférieure à V_{tête}.

Alternativement, la fraction de tête isolée dans l'étape (B) peut être constituée par les composés de deux ou plusieurs des premiers pics apparaissant sur un électrophérogramme de l'électrophorèse de l'étape (A). Le cas échéant, l'étape (B.2) consiste à faire sortir du capillaire les composés correspondant aux autres pics.

Pour isoler une fraction de tête, quelle que soit sa nature (composés correspondant à un unique pic électrophorétique ou à plusieurs pics), l'étape (B.2) peut avantageusement consister à appliquer une surpression en sortie du capillaire, jusqu'à faire sortir par l'entrée du capillaire les composés ne faisant pas partie de la fraction de tête F à isoler.

Par "application d'une surpression en sortie du capillaire", on entend, au sens de la description et des revendications, l'application d'une différence de pression positive entre la sortie et l'entrée du capillaire. En pratique, cette différence de pression positive est généralement induite en appliquant une surpression au niveau de la sortie du capillaire. Toutefois, selon certains modes de réalisation particuliers, cette différence de pression peut également être induite en appliquant une dépression à l'entrée du capillaire, éventuellement conjointement à une surpression à la sortie du capillaire. La *"surpression en sortie du capillaire"* à laquelle il est fait référence dans la présente description désigne, de façon générale, la différence de pression positive appliquée entre la sortie et l'entrée du capillaire.

Lorsqu'une surpression est appliquée en sortie du capillaire, le diamètre du capillaire utilisé est avantageusement inférieur à 50 microns, plus préférentiellement inférieur ou égal à 30 microns, et encore plus avantageusement inférieur ou égal à 25 microns. La surpression imposée en sortie du capillaire est quant à elle de préférence la plus faible possible, notamment de façon à éviter des phénomènes de dispersion, qui se traduiraient par un étalement des pics observés sur un électrophérogramme, de nature à nuire à la qualité de la séparation obtenue. Ainsi, on préfère en général que la surpression imposée dans l'étape (B) soit une surpression inférieure à 10 KPa (100 millibars), et de préférence inférieure à 8 KPa (80 millibars), avantageusement inférieure à 1 psi, (c'est-à-dire inférieure à 6893 Pa). Le plus souvent, la valeur limite de la surpression imposable sans observer un étalement de pic trop important est à adapter en fonction du diamètre interne du capillaire employé. Ainsi, plus le capillaire sera fin, plus une surpression importante pourra être imposée. A titre d'exemple, pour un capillaire de diamètre interne inférieur à 20 microns (10 microns par exemple), on pourra envisager d'imposer une surpression allant jusqu'à 100 millibars, voire jusqu'à 2 psi (138 millibars) sans observer de phénomènes de dispersion trop marqués. En revanche, pour des capillaires de diamètre interne compris entre 20 et 30 microns (typiquement 25 microns), il est préférable de ne pas dépasser une surpression de 1 psi (69 millibars). Pour des capillaires de diamètre interne supérieur à 30 microns, la surpression envisageable sans observer de phénomènes de dispersion gênant est de préférence inférieure à 0,5 psi (3,45 KPa), et encore plus avantageusement inférieure à 0,2 psi (1,38 Pa). Pour un diamètre interne de 50 microns, il est préférable de ne pas dépasser 0,1 psi (0,69 Pa).

Alternativement, dans certains cas, l'étape (B.2) mise en oeuvre pour isoler une fraction de tête peut également consister à :
(i) appliquer, entre l'entrée et la sortie du capillaire, une différence de potentiel, de polarité contraire à celle de l'étape (A), en prenant soin de ne pas recombiner la fraction F à isoler avec les autres composés séparés du mélange M ; puis
(ii) appliquer une surpression en sortie du capillaire jusqu'à faire sortir par l'entrée du capillaire les composés ne faisant pas partie de la fraction de tête F à isoler, le plus souvent en maintenant la différence de potentiel de l'étape (i).

La mise en oeuvre des étapes (i) et (ii) précitées pour réaliser l'étape (B.2) permet notamment de limiter les phénomènes d'étalement des pics qui peut être observé lorsque (B.2) consister uniquement à appliquer une surpression en sortie du capillaire.

Lorsqu'elle est mise en oeuvre, l'étape (i) est conduite pendant une durée suffisamment courte pour ne pas mener à une recombinaison du ou des pic(s) de tête à isoler avec les pics qu'on souhaite éliminer du capillaire. Lorsque la fraction F à isoler n'est pas constituée d'un seul pic de tête, mais de plusieurs, l'étape (i) est en outre avantageusement conduite pendant un temps suffisamment court pour qu'on n'observe pas de recombinaison des pics de la fraction F à isoler. En pratique, la différence de potentiel appliquée entre la sortie et l'entrée du capillaire dans l'étape (i) est en général la même différence de potentiel (en valeur absolue) que celle appliquée dans l'étape (A), mais avec un signe opposé. En d'autres termes, l'étape (i) est avantageusement conduite en inversant la polarité aux bornes du capillaire, par rapport à l'étape (A). En particulier dans ce cas, la durée de mise en oeuvre de l'étape (i) peut être facilement déterminée à l'aide d'un électrophérogramme de l'électrophorèse de l'étape (A), qui donne accès à la vitesse de migration de chacun des composés et à l'espacement des différents pics entre eux. Ces deux paramètres permettent de calculer l'espacement de deux pics après inversion de la polarité pendant une durée donnée. De préférence, lorsqu'elle est mise en oeuvre, l'étape (i) est de préférence conduite de façon à ce que l'espacement entre la fraction F à isoler et les autres pics à éliminer soit d'au moins 5 mm, et de préférence d'au moins 10 mm au sein du capillaire.

Lorsqu'on met en oeuvre la succession d'étape (i) et (ii) à titre d'étape (B.2) pour isoler une fraction F de tête, la surpression imposée dans l'étape (ii) à la sortie du capillaire est de préférence une surpression inférieure à 100 millibars, cette surpression étant avantageusement inférieure à 80 millibars, et avantageusement inférieure à 1 psi (69 millibars), en particulier lorsque le capillaire utilisé a un diamètre interne compris entre 20 et 50 microns. Là encore, la valeur limite de la surpression imposable dépend du diamètre interne du capillaire utilisé.

Selon un deuxième mode de réalisation du procédé de l'invention, l'étape (B) consiste à mettre en oeuvre l'étape (B.1) pour évacuer une fraction de tête, puis l'étape (B.2) pour évacuer une fraction de queue, et la fraction F isolée dans l'étape (B) est alors une fraction de coeur.

Selon ce deuxième mode de réalisation, la fraction de coeur F isolée est avantageusement constituée par les composés d'un des pics compris entre le pic de queue et le pic de tête observables sur un électrophérogramme de l'électrophorèse de l'étape (A), à savoir un mélange des composés ayant une même vitesse de migration V dans les conditions de l'électrophorèse de l'étape (A), intermédiaire entre la vitesse des composés de tête (V_{tête}) et la vitesse des composés de queue (V_{queue}). Dans ce cas, l'étape (B.1) consiste à faire sortir du capillaire tous les composés de vitesse de migration supérieure à V, et l'étape (B.2) consiste à faire sortir du capillaire tous les composés de vitesse de migration inférieure à V.

Alternativement, selon ce deuxième mode, la fraction de coeur F isolée dans l'étape (B) peut être constituée par les composés de deux ou plusieurs pics intermédiaires compris entre le pic de queue et le pic de tête, à savoir un mélange des composés ayant des vitesses de migration comprise entre une valeur V' supérieure à V_{queue} et une valeur V" supérieure à V' et inférieure à V_{tête} dans les conditions de l'électrophorèse de l'étape (A). Le cas échéant, l'étape (B.1) consiste à faire sortir du capillaire tous les composés de vitesse de migration supérieure à V", et l'étape (B.2) consiste à faire sortir du capillaire tous les composés de vitesse de migration inférieure à V'.

Ainsi, l'isolement d'une fraction de coeur passe par une première étape (B.1) qui consiste à éliminer une fraction de tête, ce par quoi la fraction F à isoler devient la fraction de tête dans le capillaire. Dès lors, l'isolement de cette fraction F revient à isoler une fraction de tête selon l'étape (B.2), comme dans le premier mode de réalisation du procédé. Ainsi, pour isoler une fraction de coeur, l'étape (B.2) mise en oeuvre suite à l'étape (B.1) peut avantageusement être conduite dans les conditions du premier mode de réalisation du procédé.

Ainsi, l'étape (B.2) utilisée dans la cadre de l'isolation d'une fraction de coeur consiste de préférence à :
- selon une première possibilité : appliquer une surpression en sortie du capillaire, de préférences dans les gammes avantageuses indiquées pour le premier mode de réalisation du procédé, jusqu'à faire sortir par l'entrée du capillaire les composés ne faisant pas partie de la fraction de tête F à isoler, à savoir les composés de vitesse de migration inférieure à V' dans les conditions de l'électrophorèse de l'étape (A) ; ou
- selon une deuxième possibilité, adaptée notamment pour limiter les phénomènes d'étalement des pics :
   (i) appliquer, entre l'entrée et la sortie du capillaire, une différence de potentiel, de polarité contraire à celle de l'étape (A), en prenant soin de ne pas recombiner la fraction F à isoler avec les autres composés séparés du mélange M ; puis
   (ii) appliquer une surpression en sortie du capillaire, de préférences dans les gammes avantageuse indiquées pour le premier mode de réalisation du procédé, jusqu'à faire sortir par l'entrée du capillaire les composés ne faisant pas partie de la fraction de tête F à isoler, à savoir les composés de vitesse de migration inférieure à V' dans les conditions de l'électrophorèse de l'étape (A).

Selon un troisième mode de réalisation du procédé de l'invention, la fraction F isolée dans l'étape (B) du procédé est une fraction de queue, à savoir une fraction constituée par un mélange de composés ayant une (ou des) vitesse(s) de migration inférieure(s) à celle des composés qu'on fait migrer hors du capillaire. Dans ce cas, l'étape (B) consiste à mettre en oeuvre uniquement l'étape (B.1), sans mettre en oeuvre l'étape (B.2).

Selon ce mode de réalisation, la fraction F isolée dans l'étape (B) est avantageusement constituée par les composés du pic de queue observable sur un électrophérogramme de l'électrophorèse de l'étape (A), à savoir un mélange des composés ayant la vitesse de migration (V_{queue}) la plus faible dans les conditions de l'électrophorèse de l'étape (A), qui sortent donc en dernier lieu sur un électrophérogramme de l'électrophorèse de l'étape (A). Dans ce cas, l'étape (B.1) consiste à faire sortir du capillaire les autres composés que les composés du pic de queue, à savoir tous les composés qui ont une vitesse de migration supérieure à V_{tête}.

Alternativement, la fraction de tête isolée dans l'étape (B) peut être constituée par les composés de deux ou plusieurs des derniers pics apparaissant sur un électrophérogramme de l'électrophorèse de l'étape (A). Le cas échéant, l'étape (B.1) consiste à faire sortir du capillaire les composés correspondant aux autres pics.

Quel que soit le mode de mise en oeuvre de l'étape (B), cette étape est spécifiquement conduite de façon à faire migrer la fraction F isolée à proximité d'une des extrémités du capillaire (indifféremment l'entrée ou la sortie, mais le plus souvent la sortie), préalablement à l'introduction du milieu séparateur MS² de l'étape (C). Avantageusement, on préfère qu'à l'issue de l'étape (B), la fraction F isolée au sein du capillaire soit localisée dans le premier ou le dernier dixième dudit capillaire, de préférence dans le premier ou le dernier vingtième, et typiquement à une distance de l'entrée ou de la sortie du capillaire comprise entre 0,5 et 2 cm et, de préférence, à une distance de l'ordre de 1 cm d'une des extrémités du capillaire (une distance de sécurité étant préférable pour s'assurer d'éviter la sortie de tout ou partie de la faction F hors du capillaire).

L'étape (B) du procédé de l'invention a pour but d'isoler la fraction F *au sein* du capillaire. Pour éviter tout départ intempestif de la fraction F à isoler vers le milieu extérieur, il est avantageux de disposer un détecteur au niveau de l'extrémité du capillaire à proximité de laquelle on souhaite localiser la fraction F à l'issue de l'étape (B) (ou tout au moins à un niveau proche de cette extrémité du capillaire, typiquement à une distance de 1 à 10 cm de l'entrée), ce qui permet par ailleurs de contrôler également la sortie des différentes fractions éventuellement à éliminer par cette extrémité dans l'étape (B.1) ou (B.2). De même, il est en général indiqué que le capillaire possède aussi un détecteur au niveau de l'autre extrémité du capillaire, permettant de contrôler l'élimination des différentes fractions à éliminer par la sortie du capillaire ce qui permet notamment de contrôler l'élimination des différentes fractions éventuellement à éliminer par cette extrémité dans l'étape (B.2) ou (B.1).

La migration de la fraction F isolée à proximité d'une des extrémités du capillaire peut être effectuée par tout moyen connu en soi. Cette migration peut notamment avoir lieu *de facto* lors de la mise en oeuvre des étapes (B.1) ou (B.2). Alternativement, si besoin est, on peut faire migrer la fraction F vers une des extrémités du capillaire en appliquant une surpression au niveau de l'autre extrémité (ou plus généralement une différence de pression adaptée entre les deux extrémités du capillaire) et/ou en appliquant une différence de potentiel adaptée entre les deux extrémités du capillaire.

Dans l'étape (C) qui suit l'étape (B), on introduit dans le capillaire un deuxième milieu de séparation MS², qui est distinct du milieu de séparation MS¹ employé dans l'étape (A). La nature de ce deuxième milieu séparateur MS² peut varier en une très large mesure, la nature de ce milieu pouvant être adaptée au cas par cas en fonction des constituants du mélange M et plus spécifiquement des constituants de la fraction F qu'on souhaite séparer dans l'étape (D).

De façon générale, le milieu de séparation MS² introduit dans l'étape (C) peut être tout milieu adapté à une séparation électrophorétique dans l'étape (D). Comme souligné plus haut dans la description, un des avantages du procédé de l'invention est qu'il permet d'envisager la mise en oeuvre de n'importe quel type de milieu de séparation pour l'étape (D).

Selon un mode de réalisation avantageux du procédé de l'invention, on préfère toutefois que le milieu de séparation MS² introduit dans l'étape (C) soit un milieu plus conducteur électriquement que le milieu de séparation MS¹ employé dans l'étape (A), par exemple un milieu ayant une force ionique supérieure à celle du milieu de séparation MS¹. L'emploi d'un tel milieu MS² plus conducteur électriquement que le milieu MS¹ conduit en effet à un phénomène de concentration bien connu (phénomène d'amplication de champ électrique usuellement désigné par le terme de "stacking"), qui permet notamment de réduire la dispersion des pics, en contrebalançant les effets délétères que la pression appliquée dans l'étape (C) est susceptible d'avoir dans certains cas. Pour plus de détails concernant l'effet dit de "stacking", on pourra notamment se reporter à l'aticle de R.-L. Chien dans M. G. Khaledi, High Performance Capillary Electrophoresis, Chemical Analysis Series, vol. 146, Chapitre 13, pp 449-479 (1998)

Selon une variante particulière de l'invention, qui se révèle souvent intéressante en termes d'efficacité de séparation dans l'étape (D), on peut introduire dans le capillaire une zone électrolyte transitoire, dite "preplug", entre la fraction F à analyser et le milieu MS². Plus précisément, selon cette variante spécifique, on introduit dans l'étape (C) d'abord une faible quantité d'un premier milieu de séparation ms² différent des milieux MS¹ et MS², puis le milieu MS². A l'issue de l'étape (C), on obtient ainsi un capillaire rempli par le milieu de séparation MS² avec la fraction F à séparer à proximité d'une des extrémités du capillaire et une faible quantité de milieu ms² entre la fraction F et le milieu de séparation MS². Cette faible quantité de milieu ms² joue le rôle de zone électrolyte transitoire dans l'étape de séparation (D), où elle permet notamment d'amplifier le phénomène de concentration par stacking, ou bien de refocaliser la fraction F par phénomène d'isotachophorèse transitoire. Le milieu ms² employé dans le cadre de cette variante particulière peut être le milieu MS¹ ou MS² très dilué, dans le cas où on recherche l'amplification de l'effet de stacking. Dans le cas où l'on recherche un phénomène d'isotachophorèse transitoire, le milieu ms² peut être un électrolyte contenant un ion meneur, dont la charge est de même signe que les solutés à séparer mais dont la mobilité apparente est supérieure à celle des solutés. La quantité de milieu ms² introduite peut varier dans une large mesure et doit être optimisée suivant la nature des solutés. Cette quantité peut typiquement varier entre 1% et 90% du volume du capillaire, cette quantité étant avantageusement inférieure à 10% dans le cadre de la recherche d'un phénomène de stacking.

A noter également qu'il est avantageux d'introduire une zone électrolyte après l'injection de l'échantillon dans l'étape (A). Dans ce cadre, il se révèle intéressant d'introduire dans l'étape (A), après injection du mélange M et avant la séparation, une faible quantité d'un électrolyte, avantageusement moins conducteur électriquement que le milieu MS1 (typiquement de force ionique plus faible). L'électrolyte ainsi injecté forme une zone électrolyte jouxtant le mélange M dans le capillaire, qui peut avoir différents avantages :
(i) cette zone peut contribuer à éviter l'éjection hors du capillaire de composés d'intérêt lors de l'étape (B) : en effet, elle décale l'échantillon injecté par rapport à l'extrémité du capillaire ; et
(ii) elle conduit à une meilleure efficacité dans le cas où l'électrolyte injecté est moins conducteur électriquement que le milieu MS1.

Selon un mode de réalisation intéressant, on peut introduire à titre de milieu MS² un milieu comprenant des polymères en solution ou sous forme de gel. Selon ce mode de réalisation, l'étape (A) peut par exemple être une électrophorèse conduite en milieu libre (milieu MS¹ de type solution aqueuse tamponnée) et l'étape (D) peut être conduite dans un milieu MS² similaire au milieu MS¹ mais comprenant en outre un polymère. Il est également possible, à l'inverse d'employer à titre de milieu MS¹ un milieu comprenant des polymères en solution ou sous forme de gel et un milieu libre à titre de milieu MS². Dans ce cadre, selon un autre mode de réalisation, l'étape (A) peut être une électrophorèse conduite dans un milieu MS¹ comprenant des polymères et l'étape (D) peut être conduite en milieu libre, par exemple dans un milieu MS² de type solution aqueuse tamponnée.

On peut également introduire à titre de milieu MS² un milieu micellaire, à savoir un milieu de séparation comprenant des micelles, notamment des micelles de tensioactif tel que, par exemple, le dodécylsulfate de sodium, notamment du type des milieux micellaires décrits par J. M. Davis dans M. G. Khaledi, High Performance Capillary Electrophoresis, Chemical Analysis Series, vol. 146, Chapitre 3, pp 77-131 (1998).

Le milieu MS² diffère généralement du milieu MS¹ par sa composition chimique. Il peut également varier du milieu MS¹ par la valeur de son pH. Selon un mode de réalisation particulier, les milieux MS¹ et MS² diffèrent uniquement par leur pH. Ce mode de réalisation peut par exemple permettre de modifier les charges portées par les espèces contenues dans la fraction F entre l'étape (A) et l'étape (D). Il peut notamment être mis en oeuvre pour l'analyse de mélanges à base d'acides aminés, ou bien encore de peptides, de protéines, de polymères synthétiques ou de latex.

Quelle que soit sa nature exacte, le milieu MS² est avantageusement introduit dans l'étape (C) en appliquant une différence de pression adaptée entre les extrémités du capillaire, de préférence une différence de pression suffisamment faible pour éviter une perte trop importante de la définition du pic de la fraction F séparée lors des étapes (A) et (B). A cet effet, la différence de pression appliquée entre les extrémités du capillaire pour introduire le milieu de séparation MS² dans l'étape (C) va avantageusement de 0,1 psi à 5 psi (0,69 Pa à 34,47 Pa), typiquement de 0,3 psi à 3 psi, en particulier pour des capillaires de diamètre interne de l'ordre de 25 à 50 micron.

La différence de pression appliquée entre l'entrée et la sortie du capillaire dans l'étape (C) est généralement induite en appliquant une surpression au niveau de l'extrémité du capillaire par laquelle on souhaite faire entrer le milieu séparateur MS². Toutefois, selon une variante particulière, on peut également introduire une dépression au niveau de l'autre extrémité du capillaire.

L'étape (D) est quant à une étape de séparation usuelle par électrophorèse capillaire de zone, mettant en oeuvre à titre de milieu de séparation le milieu MS² introduit dans l'étape (C). Cette étape peut être conduite selon tout moyen connu en soi. Il est des compétences du spécialiste dans le domaine d'adapter les conditions de mise en oeuvre de l'étape (D) pour atteindre la séparation recherchée. Cette étape de séparation peut être effectuée aussi bien en milieu libre qu'en présence de polymères, et en absence ou en présence de tensioactif.

La plupart des dispositifs d'électrophorèse capillaire usuels peuvent être utilisés pour conduire les étapes (A) à (D) procédé de l'invention. Par exemple, le procédé de l'invention peut avantageusement être mis en oeuvre dans un appareil d'électrophorèse capillaire de type 3DCE commercialisé par Agilent Technologie, ou bien un appareil de type PACE MDQ vendu par Beckman Coulter.

De façon plus générale, le capillaire mis en oeuvre dans les étapes (A) à (D) est avantageusement un capillaire de diamètre interne compris entre 5 et 100 microns. Notamment de façon à pouvoir conduire les étapes (B2) et (C) de façon optimale, ce diamètre interne est avantageusement inférieur ou égal à 50 microns, de préférence inférieur ou égal à 40 microns, et avantageusement inférieur ou égal à 30 microns, voire, dans certains cas, inférieur à 20 microns. Il est toutefois préférable que ce diamètre interne reste égal ou supérieur à 10 microns, voire à 15 microns, notamment de façon à ne pas diminuer de façon trop importante la sensibilité de la détection.

Ainsi, à titre de capillaire avantageusement utilisable pour mettre en oeuvre le procédé de séparation selon l'invention, on peut notamment citer les capillaires de diamètre interne entre 10 et 50 microns, tels que les capillaires usuels de diamètre interne égal à 10 microns, 25 microns ou à 50 microns, les capillaires de 25 microns se révélant en particulier bien adaptés dans la plupart des cas.

Par ailleurs, notamment de façon à optimiser la qualité de la séparation des étapes (A) et (D), un capillaire utilisé pour le procédé de l'invention est de préférence un capillaire de longueur la plus faible possible, de préférence inférieure à 1 m et avantageusement inférieure à 50 cm. En général, et en particulier lorsque l'étape (B.2) est mise en oeuvre, on préfère que la longueur du capillaire reste inférieure ou égale à 40 cm, cette longueur étant avantageusement inférieure ou égale à 35 cm, notamment pour permettre d'effectuer l'étape (B.2) sans observer de phénomènes d'élargissement de pics trop prononcés. Ainsi, typiquement, la longueur d'un capillaire mis en oeuvre dans les étapes (A) à (C) du procédé de l'invention est avantageusement compris entre 20 et 60 cm, de préférence entre 20 et 40 cm (typiquement de l'ordre de 30 à 35 cm).

Le procédé de séparation de la présente invention est un procédé à la fois simple et efficace à mettre en oeuvre, qui permet le plus souvent d'obtenir une séparation particulièrement résolutive de constituants du mélange M.

A ce sujet, il est à noter que les avantages du procédé de l'invention ne sont pas limités à la mise en oeuvre d'une séparation électrophorétique bidimensionnelle. En fait, il est tout à fait possible d'intégrer le procédé de l'invention dans un procédé de séparation tridimensionnel (et plus généralement multidimensionnel). Dans ce cadre, selon un mode de réalisation de l'invention, le procédé de l'invention comprend, à l'issue aux étapes (A) à (D), un ou plusieurs cycle(s) supplémentaire(s) de séparation / analyse électrophorétique, comprenant des étapes similaires aux étapes (B) à (D) précitées. Dans ce cadre, le procédé de l'invention peut par exemple comprendre, suite aux étapes (A) à (D), un ou plusieurs cycles de séparation/analyse électrophorétique, comprenant chacun les étapes suivantes (B-bis) à (D-bis) suivantes:
(B-bis) on isole, dans le capillaire employé dans les étapes (A) à (D), une fraction (f) des composés séparés dans l'étape précédant l'étape (B-bis), et on fait migrer ladite fraction (f) isolée à proximité d'une des extrémités du capillaire, en maintenant cette fraction (f) au sein du capillaire, typiquement en mettant en oeuvre l'une et/ou l'autres des étapes suivantes :
(B-bis.1) on évacue hors du capillaire une partie des composés ayant les vitesses de migration les plus élevées dans les conditions de l'électrophorèse de l'étape précédant l'étape (B-bis), en laissant migrer ces composés en sortie du capillaire ; et/ou
(B-bis.2) on évacue hors du capillaire une partie des composés ayant les vitesses de migration les plus faibles dans les conditions de l'électrophorèse de l'étape précédant l'étape (B-bis), en faisant migrer ces composés vers l'entrée du capillaire,
(C-bis) en appliquant une différence de pression entre les extrémités du capillaire, on introduit dans le capillaire un milieu de séparation MS²_{bis}, distinct des milieux de séparation employés dans les étapes de séparation précédentes, cette introduction du nouveau milieu de séparation étant réalisée par l'extrémité du capillaire à proximité de laquelle est localisée la fraction (f) à l'issue de l'étape (B-bis) ; et
(D-bis) on effectue une électrophorèse capillaire au sein du capillaire ainsi rempli par le milieu de séparation MS²_{bis} en faisant migrer les composés de la fraction (f) sous l'effet d'une différence de potentiel appliquée entre l'entrée et la sortie du capillaire, en employant le milieu MS²_{bis} à titre de milieu de séparation.

Dans ce cadre, il n'y a, selon l'invention, aucune restriction sur le nombre de dimensions que l'on peut effectuer au cours d'une analyse, si ce n'est le temps d'analyse qui, bien sûr croît avec le nombre de dimensions réalisées.

Selon un mode de réalisation particulier, le procédé de l'invention peut par exemple être une méthode de séparation tridimensionnelle comprenant :
- une étape (A) mise en oeuvre pour purifier le milieu M à analyser, de préférence à faible force ionique (première dimension) ;
- une étape (D) mise en oeuvre pour séparer les solutés selon un premier critère moléculaire, de préférence à force ionique plus élevée que dans l'étape (A), par exemple une séparation en milieu libre selon le rapport charge / masse (deuxième dimension) ; et
- une étape (D-bis) mise en oeuvre pour séparer les solutés selon un deuxième critère moléculaire, avantageusement à force ionique plus élevée que dans l'étape (D), par exemple lié à la chiralité ou à la masse molaire (troisième dimension).

Le procédé de l'invention présente en outre l'intérêt d'être conduit au sein d'un unique capillaire, ce qui permet de récupérer les composés séparés à la sortie dudit capillaire comme dans le cas d'une électrophorèse capillaire classique. Cette caractéristique permet notamment d'envisager l'analyse des constituants séparés obtenus à l'issu de l'étape (C). Pour ce faire, suite à la séparation de l'étape (C), les composés sous forme séparée sont injectés du capillaire vers un dispositif d'analyse, tel qu'un spectromètre de masse (quadrupôle, trappe d'ions, temps de vol), ou bien encore un détecteur conductimétrique ou électrochimique (injection en ligne du capillaire vers un autre dispositif d'analyse). Cette utilisation particulière du procédé constitue un autre objet spécifique de la présente invention.

Compte tenu de ces différents avantages, le procédé de l'invention est adapté pour réaliser la séparation des constituants de nombreux mélanges. En fait, le procédé de l'invention peut, en pratique, être conduit sur tout mélange adapté à une séparation par électrophorèse.

En particulier, le procédé peut être employé pour le diagnostic médical. Le mélange M séparé en différents constituants dans ce cadre peut alors être par exemple, un échantillon d'urine, un échantillon sanguin (plasma), un mélange de protéines (isoformes, formes glyquées / non glyquées), un mélange de peptides, un mélange d'acides aminés (neurotransmetteurs par exemple). Dans ce cadre, la séparation bidimensionnelle peut être utilisée pour réaliser la purification de l'échantillon ("*sample clean up*") en première dimension, et la séparation des composés d'intérêt en deuxième dimension ; ou bien encore pour réaliser deux séparations permettant d'obtenir des sélectivités très différentes dans le but d'augmenter la capacité de pics par rapport à une séparation monodimensionnelle. Selon ce deuxième mode, on citera la possibilité de séparer des composés selon deux dimensions ayant les propriétés suivantes : chirale /non chirale ; non micellaire / micellaire ; en milieu libre / en solution de polymère ou en solution de polymère / en milieu libre, ou encore deux électrolytes de pH différents.

Le procédé peut aussi être mis en oeuvre pour l'analyse protéomique (analyse bidimensionnelle par électrophorèse capillaire de peptides issus d'une digestion enzymatique).

Enfin, le procédé est aussi particulièrement adapté à la séparation de macromolécules synthétiques, de latex ou de colloïdes. Dans ce cas, l'étape (A) est avantageusement une étape d'électrophorèse sans milieu séparateur ("en milieu libre"), permettant une séparation des macromolécules selon leur rapport charge/masse, le milieu séparateur MS² introduit dans l'étape (C) étant alors de préférence une solution d'un polymère non chargé adaptée à une séparation des composés présent dans la fraction isolée F selon leur masse molaire.

De façon plus générale, le mélange M séparé en plusieurs constituants selon l'invention peu comprendre des protéines, des peptides, des acides nucléiques, des polysaccharides, des acides humiques, des acides fluviques, des latex, des colloïdes, des nanoparticules, et/ou des polymères synthétiques.

Différents aspects et avantages du procédé apparaîtront de façon encore plus explicite au vu de l'exemple ci-après, et des figures annexées où :
- La Figure 1 est un schéma illustratif des étapes (A) à (D) du procédé de l'invention.
- La Figure 2 reporte des électrophérogramme obtenus dans le cadre de la séparation effectuée dans les conditions de l'exemple.

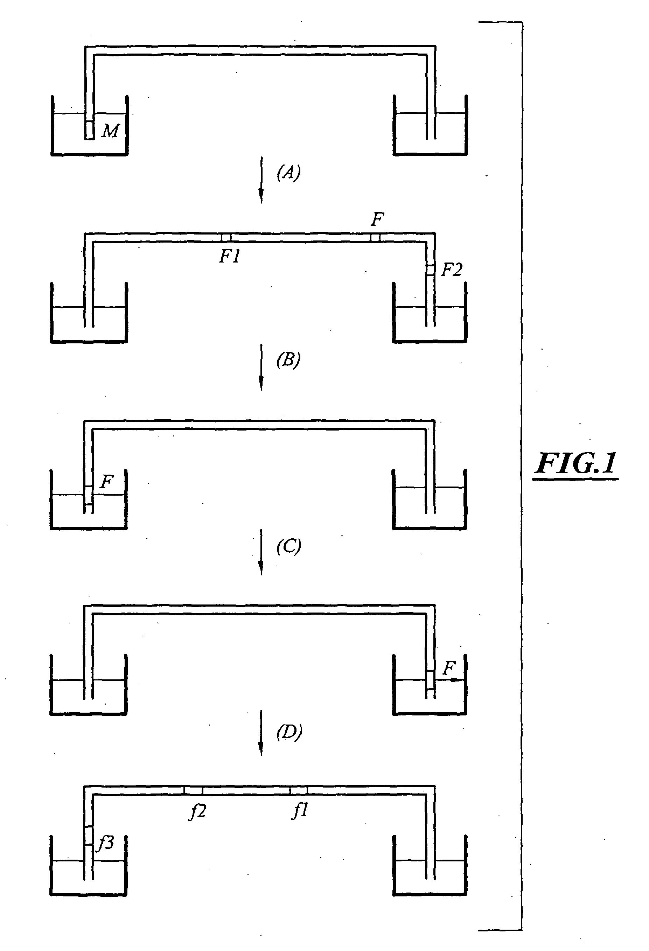

Sur la figure 1, il est représenté sous la forme d'une succession de schémas la séparation effectuée dans le cadre du procédé de l'invention.

Sur cette succession de schémas, le premier schéma en partant du haut représente le mélange M introduit dans le capillaire, les extrémités du capillaire étant plongées chacune dans un récipient rempli par un premier milieu de séparation MS¹. Bien que cela ne soit pas représenté sur la figure, l'injection du mélange M peut être avantageusement suivie d'une injection d'électrolyte formant une zone électrolyte jouxtant le composé M dans le capillaire.

Le deuxième schéma représente le système à l'issue de l'étape de séparation (A), le mélange M étant séparé sous la forme de plusieurs fractions (F1, F2 et F sur le schéma). Les extrémités du capillaire sont toujours chacune plongées dans un récipient rempli par le premier milieu de séparation MS¹

Le troisième schéma représente le système à l'issue de l'étape (B) : les fractions autres que la fraction F (F1 et F2) ont été éliminées hors du capillaire et la fraction F a migré à proximité de l'extrémité gauche du capillaire. Là encore les extrémités du capillaire sont chacune plongées dans un récipient rempli par le milieu de séparation MS¹. Cet état se situe juste avant l'étape (C) où on va remplir le capillaire par un deuxième milieu de séparation MS² en faisant dans le même temps migrer la fraction F vers l'autre extrémité du capillaire. A ce stade, on remplace le récipient de gauche par un récipient rempli par ce deuxième milieu de séparation MS²

Le quatrième schéma représente le système à l'issue de l'étape (C), le capillaire étant maintenant rempli par le milieu de séparation MS², et la fraction F se trouvant à proximité de l'extrémité droite du capillaire, prête à être séparée par l'électrophorèse de l'étape (D). Les extrémités du capillaire sont maintenant chacune plongées dans un récipient rempli par le deuxième milieu de séparation MS².

Le cinquième et dernier schéma représente le système à l'issue de la séparation de l'étape (D), la fraction F ayant été séparés en différentes fractions (f1, f2 et f3) par électrophorèse capillaire au sein du milieu MS². Un détecteur situé au niveau de l'extrémité gauche du capillaire (non représenté sur le schéma) permet d'identifier les pics correspondants.

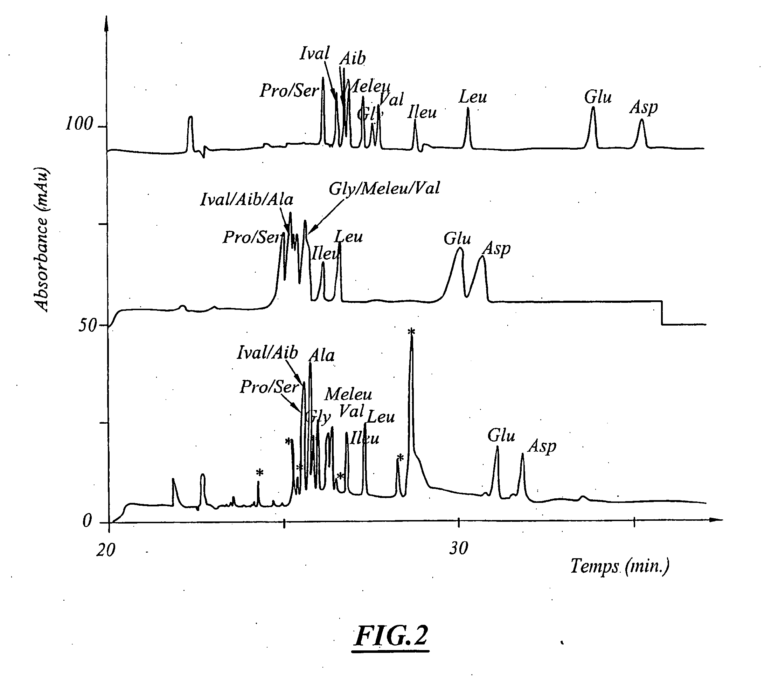

La figure 2 se rapporte à l'exemple ci-dessous.

### EXEMPLE

### Séparation bidimensionnelle dans un unique capillaire (purification et séparation d'un mélange de dérivés d'acides aminés).

Dans cet exemple, le procédé de l'invention a été utilisé pour effectuer à la fois (1) la purification d'un mélange complexe et (2) l'analyse des constituants du mélange ainsi purifié, en employant uniquement un seul et unique capillaire.

Plus précisément, on a effectué la séparation d'un mélange complexe issu d'une réaction d'un mélange d'acide aminés avec de la chloroéthylnitrosourée (Cl-(CH₂)₂-N=N-OH) dans un mélange eau / acétone.

Le mélange d'acide aminés dérivés soumis à la réaction contient initialement, 10⁻³ mol/L de chaque acide aminé (sérine (Ser),proline (Pro),acide alpha-isobutyrique (AIB), Valine (Val),isovaline (IVal),alanine (Ala),glycine (Gly)leucine (Leu), isoleucine (Ileu),méthyl-leucine (Meleu),glutamate (Glu),asparatate (Asp).

Dans le mélange eau / acétone employé, la chloroéthylnitrosourée mène à une des composés à fonctinalité isocyanate selon la réaction suivante:

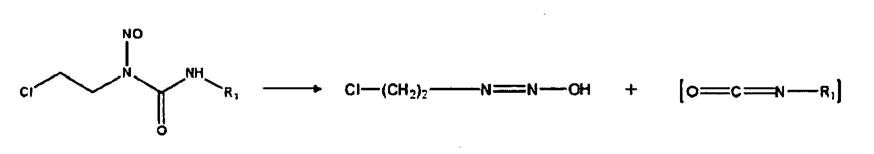

Les composés à fonction isocyanate ainsi formés réagissent avec la fonction amine des acides aminés pour donner l'acide aminé dérivé selon la réaction suivante :

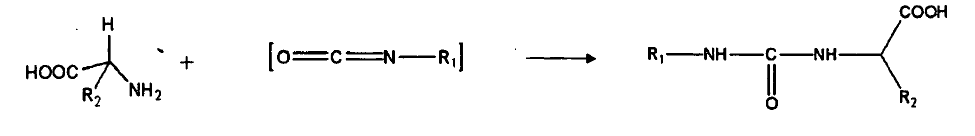

Pour effectuer la séparation du mélange obtenu, on a utilisé un capillaire en silice vierge, de diamètre interne de 25 microns et de longueur égale à 30 cm. Pour suivre l'évolution des séparations au sein du capillaire, on a placé un détecteur à 20 cm de la sortie du capillaire (Détection par absorbance UV à 214 nm). On a travaillé à une température de 25°C.

### (a) Séparation électrophorétique (Première dimension)

On a rempli le capillaire par un premier milieu séparateur qui est une solution S1 constituée par un tampon borate de sodium 200 mM, de pH 9,2 dans un mélange eau / isopropanol (à 85/15 en volume). Cette solution S1 a été injecté sous pression dans le capillaire. Le capillaire a été purgé pendant 5 minutes par le tampon borate.

On a ensuite injecté le mélange à analyser dans le capillaire, sous une pression de 0,3 psi (2,07 Pa) pendant 3 secondes.

On a ensuite immédiatement injecté du tampon S1 (injection sous une pression de 0,3 psi (2,07 Pa) pendant 3 secondes), formant ainsi une zone électrolyte (« plug ») immédiatement derrière le mélange.

On a ensuite appliqué, entre l'entrée et la sortie du capillaire, plongées chacune dans un récipient rempli de solution S1, une différence de potentiel de +20 kV pendant 4,82 min (rampe en tension de 0,25 min), de façon à séparer les constituants du mélange M par électrophorèse.

On a observé, au niveau du détecteur, l'apparition d'un premier pic (pic de tête) correspondant à des impuretés (composés neutres).

### (b) Isolation de la fraction d'intérêt (purification du mélange)

On a maintenu la différence de potentiel de +20 kV appliquée dans l'étape précédente, de façon à laisser sortir les impuretés dans le capillaire, et à ne conserver que les composés d'intérêt dans le capillaire (acides aminés fonctionnalisés).

Pour procéder à cette élimination, on a mesuré le temps T mis par les impuretés pour parcourir les 10 premiers centimètres du capillaire (de l'entrée au détecteur) et, à compter du moment où ces impuretés ont été détectées, on les a laissé migrer pendant le temps 2T (nécessaire pour parcourir les 20 centimètres restant), plus quelques dizaines de secondes pour s'assurer que toutes les impuretés soient bien éliminées.

On a ensuite inversé le sens de la polarité appliquée entre les deux extrémités du capillaire (à savoir en appliquant différence de potentiel de -20 kV entre l'entrée et la sortie du capillaire), de façon à faire migrer les composés débarrassés des impuretés à l'entrée du capillaire. Au cours de cette migration, les différents composés se sont remélangés et on a ainsi obtenu à proximité de l'entrée du capillaire une fraction du mélange initial, à savoir les composés d'intérêt du mélange sans les impuretés initialement présentes.

On a maintenu la différence de potentiel de -20 kV pendant la durée totale de migration à +20 kV effectuée dans l'étape précédente. Le "plug" injecté initialement immédiatement derrière l'échantillon permet d'assurer de ne pas faire sortir les composés d'intérêt hors du capillaire.

### (c) Introduction d'un nouveau milieu séparateur dans le capillaire

On a plongé l'entrée du capillaire dans une solution **S2** comprenant un tampon borate de sodium 200 mM, pH 9,2 dans un mélange eau / isopropanol additionné de 50 mM de SDS (agent tensioactif : dodécylsulfate de sodium, formant des micelles dans le milieu, propres à mieux séparer les différents acides aminés dérivés selon leur nature chimique).

On a introduit sous pression ce nouveau milieu séparateur S2 dans le capillaire, de façon à faire migrer la fraction séparée dans l'étape (b) vers la sortie du capillaire (sans toutefois l'en faire sortir) et à remplir le capillaire avec le nouveau milieu de séparation.

Pour ce faire, on a appliqué une surpression de 0,4 psi (2,76 Pa) pendant 10,06 min à l'entrée du capillaire.

### (d) Séparation électrophorétique en présence du nouveau milieu séparateur

On a appliqué une différence de potentiel de +20 kV entre l'entrée du capillaire plongée dans un récipient rempli de solution S2, et la sortie également plongée dans un récipient rempli de solution S2.

On a observé au niveau du détecteur une séparation des différents acides aminés modifiés. L'électrophérogramme correspondant est représenté sur la Figure 2 (électrophérogramme du milieu).

A des fins de comparaison, il est représenté sur la partie basse de la figure 2 l'électrophérogramme correspondant à une séparation électrophorétique du mélange dans les conditions de l'étape (d), utilisant la solution S2 à base de micelles de SDS sans la purification antérieure de l'étape (a). Cet électrophérogramme fait apparaître de nombreux pics parasites (indexés par une étoile) qui disparaissent dans les conditions du procédé de l'invention.

Il est à noter que l'emploi d'un capillaire de diamètre interne de 25 microns au lieu de 50 microns augmente l'efficacité de la séparation et réduit l'effet dispersif de la pression hydrodynamique employée dans l'étape (b).

Il est à noter par ailleurs qu'on peut encore améliorer la séparation telle qu'obtenue en remplaçant la solution S1 employée dans l'étapes (a) par une solution S1 de plus faible force ionique que la solution S2. On a vérifié ce point en employant une solution S1' à 50mM en tampon borate. On a obtenu ainsi une pré-concentration des espèces avec une augmentation des efficacités des pics. L'amélioration de la séparation est visible sur l'électrophérogramme du haut de la figure 2 (diamètre 25 micron et solution S1' à 50mM).

## Revendications

1. Procédé de séparation des constituants d'un mélange M par électrophorèse capillaire au sein d'un unique capillaire, ledit procédé comprenant les étapes où :
(A), on introduit et on fait migrer les composés du mélange M au sein du capillaire selon la technique de l'électrophorèse capillaire, sous l'effet d'une différence de potentiel appliquée entre l'entrée et la sortie du capillaire, en employant un premier milieu de séparation MS¹, de façon à réaliser une séparation des composés du mélange M au sein du capillaire, selon leur vitesse de migration dans les conditions de l'étape (A) ;
(B) on isole dans le capillaire une fraction F des composés séparés dans l'étape (A); et on fait migrer ladite fraction F isolée à proximité d'une des extrémités du capillaire, en maintenant cette fraction F au sein du capillaire en mettant en oeuvre l'une et/ou l'autres des étapes suivantes :
(B.1) on évacue hors du capillaire une partie des composés ayant les vitesses de migration les plus élevées dans les conditions de l'électrophorèse de l'étape (A), en laissant migrer ces composés en sortie du capillaire, éventuellement en maintenant la différence de potentiel de l'étape (A) ;
et/ou
(B.2) on évacue hors du capillaire une partie des composés ayant les vitesses de migration les plus faibles dans les conditions de l'électrophorèse de l'étape (A), en faisant migrer ces composés vers l'entrée du capillaire, éventuellement appliquant une surpression en sortie du capillaire et/ou en appliquant entre l'entrée et la sortis du capillaire une différence de potentiel de polarité contraire à celle de l'étape (A),
étant entendu qu'au sens de l'étape (B), on entend par "entrée" du capillaire, l'extrémité du capillaire où est faite l'injection, la "sortie" étant l'autre extrémité ;
(C) en appliquant une différence de pression entre les extrémités du capillaire, on introduit dans le capillaire un deuxième milieu de séparation MS², distinct du milieu de séparation MS¹ employé dans l'étape (A) par l'extrémité du capillaire à proximité de laquelle est localisée la fraction F, ce par quoi on fait migrer la fraction F vers l'autre extrémité du capillaire tout en remplissant le capillaire par le milieu de séparation MS² ; et
(D) on effectue une électrophorèse capillaire au sein du capillaire ainsi rempli par le milieu de séparation MS² en faisant migrer les composés de la fraction F sous l'effet d'une différence de potentiel appliquée entre l'entrée et la sortie du capillaire, en employant le milieu MS² à titre de milieu de séparation.

2. Procédé selon la revendication 1, dans lequel l'étape (B) consiste à mettre en oeuvre l'étape (B.2) sans mettre en oeuvre l'étape (B.1), la fraction F isolée au sein du capillaire étant alors une fraction de tête.

3. Procédé selon la revendication 2, où la fraction de tête F est constituée par les composés du pic de tête observable sur un électrophérogramme de l'électrophorèse de l'étape (A).

4. Procédé selon la revendication 1, dans lequel l'étape (B) consiste à mettre en oeuvre l'étape (B.1) pour évacuer une fraction de tête, puis l'étape (B.2) pour évacuer une fraction de queue, la fraction F isolée au sein du capillaire étant alors une fraction de coeur.

5. Procédé selon la revendication 4, où la fraction de coeur F est constituée par les composés d'un des pics compris entre le pic de queue et le pic de tête observables sur un électrophérogramme de l'électrophorèse de l'étape (A).

6. Procédé selon la revendication 1, dans lequel l'étape (B) consiste à mettre en oeuvre l'étape (B.1) sans mettre en oeuvre l'étape (B.2), la fraction F isolée au sein du capillaire étant alors une fraction de queue.

7. Procédé selon la revendication 6, où la fraction de queue F est constituée par les composés du pic de queue observable sur un électrophérogramme de l'électrophorèse de l'étape (A).

8. Procédé selon l'une quelconque des revendications 1 à 7, où le milieu de séparation MS² introduit dans l'étape (C) est un milieu plus conducteur électriquement que le milieu de séparation MS¹ employé dans l'étape (A), par exemple un milieu ayant une force ionique supérieure à celle du milieu de séparation MS¹.

9. Procédé selon l'une quelconque des revendications 1 à 8, où, dans l'étape (C), on introduit d'abord une faible quantité d'un premier milieu de séparation ms² différent des milieux MS¹ et MS², puis le milieu MS², ce par quoi on obtient un capillaire rempli par le milieu de séparation MS² avec la fraction F à séparer à proximité d'une des extrémités du capillaire et une faible quantité de milieu ms² entre la fraction F et le milieu de séparation MS², cette faible quantité de milieu ms² assurant le rôle de zone électrolyte transitoire dans l'étape de séparation (D).

10. Procédé selon l'une quelconque des revendications 1 à 9, où, dans l'étape (A), après injection du mélange M et avant la séparation, on introduit une faible quantité d'un électrolyte, avantageusement moins conducteur électriquement que le milieu MS1, l'électrolyte ainsi injecté formant une zone électrolyte jouxtant le mélange M dans le capillaire.

11. Procédé selon l'une quelconque des revendications 1 à 10, où le milieu de séparation MS² introduit dans l'étape (C) est un milieu comprenant des polymères en solution ou sous forme de gel.

12. Procédé selon l'une quelconque des revendications 1 à 10, où le milieu de séparation MS² introduit dans l'étape (C) est un milieu micellaire.

13. Procédé selon l'une quelconque des revendications 1 à 12, où le milieu de séparation MS² introduit dans l'étape (C) diffère du milieu MS¹ par la valeur de son pH.

14. Procédé selon l'une quelconque des revendications 1 à 13, permettant une séparation tri- ou multi-dimensionnelle, qui comprend, suite aux étapes (A) à (D), un ou plusieurs cycles de séparation/analyse électrophorétique supplémentaires, comprenant chacun les étapes suivantes (B-bis) à (D-bis) suivantes:
(B-bis) on isole, dans le capillaire employé dans les étapes (A) à (D), une fraction (f) des composés séparés dans l'étape précédant l'étape (B-bis), et on fait migrer ladite fraction (f) isolée à proximité d'une des extrémités du capillaire, en maintenant cette fraction (f) au sein du capillaire,
(C-bis) en appliquant une différence de pression entre les extrémités du capillaire, on introduit dans le capillaire un milieu de séparation MS²_{bis}, distinct des milieux de séparation employés dans les étapes de séparation précédentes, cette introduction du nouveau milieu de séparation étant réalisée par l'extrémité du capillaire à proximité de laquelle est localisée la fraction (f) à l'issue de l'étape (B-bis) ; et
(D-bis) on effectue une électrophorèse capillaire au sein du capillaire ainsi rempli par le milieu de séparation MS²_{bis} en faisant migrer les composés de la fraction (f) sous l'effet d'une différence de potentiel appliquée entre l'entrée et la sortie du capillaire, en employant le milieu MS²_{bis} à titre de milieu de séparation.

15. Procédé selon la revendication 14, qui comprend :
- une étape (A) mise en oeuvre pour purifier le milieu M à analyser ;
- une étape (D) mise en oeuvre pour séparer les solutés selon un premier critère moléculaire, de préférence à force ionique plus élevée que dans l'étape (A)
- une étape (D-bis) mise en oeuvre pour séparer les solutés selon un deuxième critère moléculaire, avantageusement à force ionique plus élevée que dans l'étape (D).

16. Procédé selon l'une quelconque des revendications 1 à 15, où le capillaire utilisé a un diamètre interne compris entre 5 et 100 microns.

17. Procédé selon l'une quelconque des revendications 1 à 16, où le capillaire utilisé a une longueur inférieure à 1 m.

18. Procédé selon l'une quelconque des revendications 1 à 17, où le mélange M est un échantillon d'urine, un échantillons sanguin ou un mélange de protéines.

19. Procédé selon l'une quelconque des revendications 1 à 18, où le mélange M comprend des protéines, des peptides, des acides nucléiques, des polysaccharides, des acides humiques, des acides fluviques, des latex, des colloïdes, des nanoparticules, et/ou des polymères synthétiques.

## Claims

1. Process for separating the constituents of a mixture M by capillary electrophoresis in a single capillary, the process comprising the steps in which:
(A) the compounds of the mixture M are introduced into the capillary and caused to migrate therein in accordance with the capillary electrophoresis technique, under the effect of a difference in potential applied between the inlet and the outlet of the capillary using a first separating medium SM¹, in order to produce a separation of the compounds of the mixture M in the capillary in accordance with their migration rate under the conditions of step (A);
(B) a fraction F of the compounds separated in step (A) is isolated in t:he capillary, and the isolated fraction F is caused to migrate to the vicinity of one of the ends of the capillary, while keeping this fraction F inside the capillary by implementing one and/or the other of the following steps:
(B.1) a portion of the compounds having the highest migration rates under the electrophoresis conditions of step (A) is evacuated from the capillary, by hallowing those compounds to migrate to the outlet of the capillary, optionally by maintaining the difference in potential of step (A)**;**
and/or
(B.2) a portion of the compounds having the lowest migration rates under the electrophoresis conditions of step (A) is evacuated from the capillary by causing those compounds to migrate towards the inlet of the capillary, optionally by applying an overpressure at the outlet of the capillary and/or by applying between the inlet and the outlet of the capillary, a difference in potential of opposite polarity to that of step (A),
it being understood that, in the context of step (B), the "inlet" of the capillary means the end of the capillary where the injection is carried out, the "outlet" being the other end;
(C) while applying a difference in pressure between the ends of the capillary, a second separating medium SM², different from the separating medium SM¹ used in step (A), is introduced into the capillary via the end of the capillary close to which the fraction F is located, as a result of which the fraction F is caused to migrate towards the other end of the capillary, while at the same time the capillary is filled with the separating medium SM²; and
(D) capillary electrophoresis is carried out in the capillary thus fulled with the separating medium SM² by casing the compounds of fraction F to migrate under the effect of a difference in potential applied between the inlet and the outlet of the capillary, using the medium SM² as the separating medium.

2. Process according to claim 1, wherein step (B) consists in implementing step (B.2) without implementing step (B.1), the fraction F isolated in the capillary then being a head fraction.

3. Process according to claim 2, wherein the head fraction F consists of the compounds of the head peak observable on an electropherogram of the electrophoresis of step (A).

4. Process according to claim 1, wherein step (B) consists in implementing step (B.1) in order to evacuate a head fraction, then step (B.2) in order to evacuate a tail fraction, the fraction F isolated in the capillary then being a core fraction.

5. Process according to claim 4, wherein the core fraction F consists of the compounds of one of the peaks between the tail peak and the head peak which are observable on an electropherogram of the electrophoresis of step (A).

6. Process according to claim 1, wherein step (B) consists in implementing step (B.1) without implementing step (B,2), the fraction F isolated in the capillary then being a tail fraction.

7. Process according to claim 6, wherein the tail fraction F consists of the compounds of the tail peak observable on an electropherogram of the electrophoresis of step (A).

8. Process according to any one of claims 1 to 7, wherein the separating medium SM² introduced in step (c) is a medium which is more electrically conductive than the separating medium SM¹ used in step (A), for example, a medium having an ionic strength higher than that of the separating medium SM¹.

9. Process according to any one of claims 1 to 8, wherein, in step (C), first of all a small amount of a first separating medium sm² different from the media SM¹ and SM² is introduced and then the medium SM² is introduced, as a result of which a capillary filled with the separating medium SM² is obtained, with the fraction F to be separated near one of the ends of the capillary and a small amount of medium sm² between the fraction F and the separating medium SM², this small amount of medium sm² acting as a transitory electrolyte zone in the separating step (D).

10. Process according to any one of claims 1 to 9, wherein, in step (A), after injecting the mixture M and before separation, a small amount of an electrolyte, which is advantageously less electrically conductive than the medium SM¹, is introduced, the electrolyte thus injected forming an electrolyte zone next to the mixture M in the capillary.

11. Process according to any one of claims 1 to 10, wherein the separating medium SM² introduced in step (C) is a medium comprising polymers in solution or in the form of a gel.

12. Process according to any one of claims 1 to 10, herein the separating medium SM² introduced in step (C) is a micellar medium.

13. Process according to any one of claims 1 to 12, wherein the separating medium SM² introduced in step (C) differs from the medium SM¹ by the value of its pH.

14. process according to any one of claims 1 to 13, permitting a three- or multi-dimensional separation, which comprises, after steps (A) to (D), one or more additional cycles of electrophoretic separation/analysis, each comprising the following steps (B-a) to (D-a) :
(B-a) in the capillary used in steps (A) to (D), a fraction (f) of the compounds separated in the step preceding step (B-a) is isolated and the isolated fraction (f) is caused to migrate to the vicinity of one of the ends of the capillary, while keeping this fraction (f) inside the capillary,
(C-a) while applying a difference in pressure between the ends of the capillary, a separating medium SM²ₐ different from the separating media used in the preceding separating steps is introduced into the capillary, this introduction of the new separating medium being carried out via the end of the capillary near which the fraction (f) is located at the end of step (B-a); and
(D-a) a capillary electrophoresis is carried out inside the capillary thus filled with the separating medium SM²ₐ by causing the compounds of the fraction (f) to migrate under the effect of a difference in potential applied between the inlet and the outlet of the capillary, using the medium SM²ₐ as the separating medium.

15. Process according to claim 14, which comprises:
a step (A) implemented in order to purify the medium M to be analyzed;
- a step (D) implemented in order to separate the solutes in accordance with a first molecular criterion, preferably at a higher ionic strength than in step (A) ;
- a step (D-a) implemented in order to separate the solutes in accordance with a second molecular criterion, advantageously at a. higher ionic strength than in step (D).

16. Process according to any one of claims 1 to 15, wherein the capillary used has an inside diameter of from 5 to 100 microns.

17. Process according to any one of claims 1 to 16, wherein the capillary used has a length of less than 1 in.

18. Process according to any one of claims 1 to 17, wherein the mixture M is a urine sample, a blood sample or a protein mixture.

19. Process according to any one of claims 1 to 18, wherein the mixture M comprises proteins, peptides, nucleic acids, polysaccharides, humic acids, fluvic acids, latexes, colloids, nanoparticles and/or synthetic polymers.

## Patentansprüche

1. Verfahren zum Trennen der Bestandteile eines Gemischs M durch kappillare Elektrophorese im Innern einer einzigen Kapillare, wobei das genannte Verfahren die folgenden Schritte beeinhaltet:
(A) Einführen und Migrierenlassen der Bestandteile des Gemischs M im Innern der Kapillare mit einer Kapillarelektrophoresetechnik unter der Wirkung einer zwischen den Eingang und den Ausgang der Kapillare angelegten Potentialdifferenz unter Verwendung eines ersten Trennmediums MS¹ auf eine solche Weise, dass eine Trennung der Bestandteile des Gemischs M im Innern der Kapillare gemäß deren Migrationsgeschwindigkeit unter den Bedingungen von Schritt (A) erzielt wird;
(B) Isolieren einer Fraktion F der in Schritt (A) getrennten Bestandteile in der Kapillare und Migrierenlassen der genannten isolierten Fraktion F in die Nähe eines der Enden der Kapillare, wobei diese Fraktion F durch Ausführen eines und/oder mehrerer der folgenden Schritte im Innern der Kapillare gehalten wird:
(B.1) Evakuieren eines Teils der Bestandteile aus der Kapillare, die die höchsten Migrationsgeschwindigkeiten unter den Elektrophoresebedingungen von Schritt (A) haben, durch Migrierenlassen dieser Bestandteile zum Ausgang der Kapillare, eventuell unter Beibehaltung der Potentialdifferenz von Schritt (A) ; und/oder
(B.2) Evakuieren eines Teils der Bestandteile aus der Kapillare, die die niedrigsten Migrationsgeschwindigkeiten unter den Elektrophoresebedingungen von Schritt (A) haben, durch Migrierenlassen diester Bestandteile zum Eingang der Kapillare, eventuell durch Aufbringen eines Überdrucks am Ausgang der Kapillare und/oder durch Anlegen einer Potentialpolaritätsdifferenz, die der von Schritt (A) entgegengesetzt ist, zwischen dem Eingang und dem Ausgang der Kapillare,
wobei im Sinne von Schritt (B) unter "Eingang" der Kapillare das Ende der Kapillare zu verstehen ist, an der die Injektion stattfindet, wobei der "Ausgang" das andere Ende ist;
(C) Einleiten, durch Aufbringen einer Druckdifferenz zwischen die Enden der Kapillare, eines zweiten Trennmediums MS², separat von dem in Schritt (A) verwendeten Trennmedium MS¹, durch das Ende der Kapillare, in deren Nähe sich die Fraktion F befindet, wodurch die Fraktion F zum anderen Ende der Kapillare migriert wird und die Kapillare mit dem Trennmedium MS² gefüllt wird; und
(D) Bewirken einer Kapillarelektrophorese im Innern der so mit dem Trennmedium MS² gefüllten Kapillare durch Migrierenlassen der Bestandteile der Fraktion F unter der Wirkung einer zwischen den Eingang und den Ausgang der Kapillare angelegten Potentialdiffferenz unter Verwendung des Mediums MS² als Trennmedium.

2. Verfahren nach Anspruch 1, wobei Schritt (B) darin besteht, Schritt (B.2) auszuführen, ohne Schritt (B.1) auszuführen, wobei die im Innern der Kapillare isolierte Fraktion jetzt eine Kopftraktion ist.

3. Verfahren nach Anspruch 2, wobei die Kopffraktion F durch die Bestandteile der Kopsspitze gebildet wird, die auf einem Elektrophorese-Elektropherogramm von Schritt (A) beobachtet werden kann.

4. Verfahren nach Anspruch 1, wobei Schritt (B) darin besteht, Schritte (B.1) auszuführen, um eine Kopffraktion zu evakuieren, dann Schritt (B.2), um eine Schwanzfraktion zu evakuieren, wobei die im Innern der Kapillare isolierte Fraktion F eine Mittelfraktion ist.

5. Verfahren nach Anspruch 4, wobei die Mittelfraktion F durch die Bestandteile einer der Kopfspitzen zwischen der Schwanzspitze and der Kopfspitze gebildet wird, die auf einem Elektrophorese-Elektropherogramm von Schritt (A) beobachtet werden können.

6. Verfahren nach Anspruch 1, wobei Schritt (B) darin besteht, Schritt (B.1) auszuführen, ohne Schritt (B.2) auszuführen, wobei die im Innern der Kapillare isolierte Fraktion jetzt eine Schwanzfraktion ist.

7. Verfahren nach Anspruch 6, wobei die Schwanzfraktion F durch die Bestandteile der Schwanzspitze gebildet wird, die auf einem Elektrophorese-Elektropherogramm von Schritt (A) beobachter werden kann.

8. Verfahren nach einem der Ansprüche 1. bis 7, wobei das in Schritt (C) eingeleitete Trennmedium MS² ein elektrisch stärker leitendes Medium ist als das in Schritt (A) verwendete Trennmedium MS¹, z.B. ein Medium mit einer Ionenstärke, die höher ist als die des Trennmediums MS¹.

9. Verfahren nach einem der Ansprüche 1 bis 8, bei dem in Schritt (C) zunächst eine geringe Menge eines ersten Trennmediums ms² , das sich von den Medien MS¹ und MS² unterscheidet, dann das Medium MS², um dadurch eine Kapillare zu erhalten, das mit dem Trennmedium MS² mit der Fraktion F gefüllt ist, die in der Nähe eines der Enden der Kapillare getrennt werden soll, und eine geringe Menge Medium ms² zwischen der Fraktion F und dem Trennmedium MS² eingeleitet wird, wobei diese geringe Menge Medium ms² die Funktion einer Elektrolytübergangszone in Trennschritt (D) ausübt.

10. Verfahren nach einem der Ansprüche 1 bis 9, bei dem in Schritt (A) nach der Injektion des Gemischs M und vor der Trennung eine geringe Menge eines Elektolyts eingeleitet wird, der vorteilhafterweise elektrisch weniger leitet als das Medium MS¹, wobei der so injizierte Elektrolyt eine Elektrolytzone neben dem Gemisch M in der Kapillare bildet.

11. Verfahren nach einem der Ansprüche 1 bis 10, bei dem das in Schritt (C) eingeleitete Trennmedium MS² ein Medium ist, das Polymere in Lösung oder in Gelform umfasst.

12. Verfahren nach einem der Ansprüche 1 bis 10, bei dem das in Schritt (C) eingeleitete Trerinmedium MS² ein micellares Medium ist.

13. Verfahren nach einem der Ansprüche 1 bis 12, bei dem sich das in Schritt (C) eingeleitete Trennmedium MS² durch seinen pH-Wert von dem Medium MS¹ unterscheidet.

14. Verfahren nach einem der Ansprüche 1 bis 13, das eine drei- oder multidimensionale Trennung ermöglicht die nach den Schritten (A) bis (D) ein oder mehrere zusätzliche Trenn/Elektrophoreseanalyse-Zyklen beinhaltet, die jeweils die folgenden Schritte (B-bis) bis (D-bis) beinhalten:
(B-bis) Isolieren, in der in den Schritten (A) bis (D) verwendeten Kapillare, einer Fraktion (f) von Bestandteilen, die in dem Schritt von Schritt (B-bis) getrennt wurden, und Migrierenlassen der genannten isolierten Fraktion (f) in der Nähe eines der Enden der Kapillare, wobei diese Fraktion (f) im Innern der Kapillare gehalten wird,
(C-bis) Einleiten, durch Aufbringen eines Druckdifferentials zwischen die Enden der Kapillare, eines Trennmediums MS² bis in die Kapillare, verschieden von dem in den vorherigen Trennschritten verwendeten Trennmedium, wobei dieses Einleiten des neuen Trennmediums durch das Ende der Kapillare erfolgt, in dessen Nähe sich die Fraktion (f) aus Schritt (B-bis) befindet; und
(D-bis) Bewirken einer Kapillarelektrophorese im Innern der so mit dem Trennmedium MS² bis gefüllten Kapillare durch Migrierenlassen der Bestandteile der Fraktion (f) unter der Wirkung einer zwischen den Eingang und den Ausgang der Kapillare angelegten Potentialdifferenz unter Verwendung des Mediums MS² bis als Trennmedium.

15. Verfahren nach Anspruch 14, das Folgendes beinhaltet:
einen Schritt (A) zum Reinigen des zu analysierenden Mediums M;
- einen Schritt (D) zum Trennen der gelösten Stoffe gemäß einem ersten Molekülkriterium, vorzugsweise mit einer höheren Ionenstärke als in Schritt (A);
- einen Schritt (D-bis) zum Trennen der gelösten Stoffe gemäß einem zweiten Molekülkriterium, vorteilhafterweise mit einer höheren Ionenstärke als in Schritt (D).

16. Verfahren nach einem der Ansprüche 1 bis 15, wobei die verwendete Kapillare einen Innendurchmesser zwischen 5 und 100 Mikron hat.

17. Verfahren nach einem der Ansprüche 1 bis 16, wobei die verwendete Kapillare eine Länge von weniger als 1 m hat.

18. Verfahren nach einem der Ansprüche 1 bis 17, bei dem die Mischung M eine Urinprobe, eine Blutprobe oder ein Proteingemisch ist.

19. Verfahren nach einem der Anspruche 1 bis 18, bei dem das Gemisch M Proteine, Peptide, Nukleinsäuren, Polysaccharide, Huminsäüren, Fluvinsäuren, Latexe, Kolloide, Nanopartikeln und/oder synthetische Polymere umfasst.
